# EUROPEAN PATENT APPLICATION

(11) **EP 1 941 943 A1**
(43) Date of publication of application: **09.07.2008**
(21) Application number: 06810523.8
(22) Date of filing: 25.09.2006
(51) Int. Cl.: B01J 23/63, B01J 23/42, H01M 4/90

(54) **MICROPARTICLE-SUPPORTED CARBON PARTICLE, METHOD FOR PRODUCTION THEREOF, AND FUEL CELL ELECTRODE**

(30) Priority: 26.09.2005 JP 2005277022; 26.09.2005 JP 2005277024
(71) Applicant: Toyota Jidosha Kabushiki Kaisha, Toyota-shi, Aichi 471-8571 (JP)
(72) Inventor: SAWAKI, Yuko, Ibaraki-shi, Osaka 5678567 (JP); SATO, Yoshinori, Ibaraki-shi, Osaka 5678567 (JP); KISHIMOTO, Mikio, Ibaraki-shi, Osaka 5678567 (JP); NAKANISHI, Harumichi, Toyota-shi, Aichi 4718571 (JP); IMANISHI, Masahiro, Toyota-shi, Aichi 4718571 (JP)
(74) Representative: HOFFMANN EITLE
(86) International application number: PCT/JP2006/318964
(87) International publication number: WO 2007/034945

(57) **Abstract**

There are provided fine particle-carrying carbon particles, which can be used as a substitute for the existing platinum-carrying carbon particles or platinum metal particles commonly used in electrocatalysts for fuel cells or the like, and which are significantly reduced in the amount of platinum to be used in comparison with the existing platinum-carrying carbon particles, and an electrode for a fuel cell using the same carbon particles.

The fine particle-carrying carbon particle comprises a carbon particle with an average particle diameter of from 20 to 70 nm, and fine particles of a metal oxide with an average crystallite size of from 1 to 20 nm, carried on the carbon particle, wherein the metal oxide contains a noble metal element such as a platinum element, and is represented by the formula: MOx in which the metal element M is partially substituted by the noble metal element. To manufacture such fine particle-carrying carbon particles, a solution containing complex ions of a metal which constitutes the fine metal oxide particle is firstly prepared; then, carbon particles are dispersed in the resulting solution to adsorb the complex ions of the metal onto the carbon particles; and the resulting dispersion is subjected to a hydrothermal treatment.

## Description

### TECHNICAL FIELED

The present application was filed claiming the priorities under the Paris Convention based on the Japanese Patent Application No. 2005-277022 titled "FINE PARTICLE-SUPPORTING CARBON PARTICLES AND MANUFACTURING THEREOF" filed on September 26, 2005 and the Japanese Patent Application No. 2005-277024 titled "FINE PARTICLE-SUPPORTING CARBON PARTICLES AND MANUFACTURING THEREOF" filed on September 26, 2005, the entire content of which is herein incorporated by reference.
The present invention relates to fine particle-supporting carbon particles and the manufacturing of the same, and electrodes for fuel cells. Particularly, the invention pertains to fine particle-supporting carbon particles which support thereon fine particles of a metal oxide containing a noble metal element in its crystal lattice, and the manufacturing of the same.

### BACKGROUND OF THE INVENTION

Metal particle-, alloy particle- or metal oxide particle-supporting particles hitherto have been widely used as a variety of catalysts for deodorization, antibacteria, cleansing of automobile exhaust gases, fuel cells and reduction of NOx. As the carrier particles, metal oxides such as titanium oxide, zirconium oxide, iron oxide, nickel oxide, cobalt oxide, etc. and carbon are mainly used. Particularly, catalysts which comprise carbon particles having electric conductivity as carriers are useful as the electrocatalysts of fuel cells.

Above all, a catalyst which comprises particles of an alloy of platinum and ruthenium carried on a carbon carrier, and a catalyst which comprises particles of a specific metal oxide such as molybdenum oxide or cerium oxide as a co-catalyst and fine particles of a platinum metal, both carried on a carbon carrier are known as excellent electrocatalysts. It is described in Patent Publication 1 that, when platinum particles carried on particles of a corrosion resistant oxide such as cerium oxide or zirconium oxide are carried on a carbon carrier, the aggregation of the platinum particles can be prevented. It is described in Patent Publication 2 that a highly durable catalyst can be obtained by supporting at least one noble metal of platinum and palladium on a mixture of a porous carrier having a high specific surface area such as γ-alumina with a ceria-zirconia composite oxide (a solid solution of cerium oxide and zirconium oxide).

In the meantime, the following methods are mainly employed to support a metal oxide on the surface of a carrier.
(1) Metal colloid particles are adsorbed onto the surface of a carrier.
(2) Carrier particles are dispersed in an aqueous solution of a metal salt, and an alkali is added to the dispersion to deposit a metal hydroxide on the surfaces of the carrier particles.
(3) A dispersion of fine particles is prepared in advance, and the fine particles are fixed on the surface of a carrier from the dispersion.

As the known examples employing the above liquid phase methods, Patent Publications 3 and 4 are given. According to Patent Publication 3, carbon particles which previously have been caused to support platinum thereon are dispersed in a solution of a mixture of salts of other predetermined metals, and an alkali is added to the dispersion to deposit the hydroxide of the above metals on the carbon particles; and such carbon particles are heated at not lower than 1,000°C under a reducing atmosphere so that the fine particles of an alloy (of four elements, i.e., platinum, molybdenum, nickel and iron) are carried on the carbon particles. In this regard, the carried fine alloy particles are about 3 nm or more in size.

According to Patent Publication 4, to obtain particles comprising vanadium pentoxide carried on carbon particles, an organic solvent is added to an organic vanadium solution to cause a solvation to thereby form an organic complex, which is then adsorbed and carried onto the carbon particles. In this case, the vanadium pentoxide carried on the carbon particles is amorphous.

Patent Publication 1: JP-A-2004-363056
Patent Publication 2: JP-A-10-277389/1998
Patent Publication 3: JP-A-5-217586/1993
Patent Publication 4: JP-A-2000-36303

### DISCLOSURE OF THE INVENTION

### PROBLEMS TO BE SOLVED BY THE INVENTION

In case where the conventional catalysts comprising the above-described metal particles, alloy particles and metal oxide particles or these particles carried on the carriers are used as electrocatalysts for fuel cells or the like, there is a problem that their corrosion resistance is insufficient. For example, when an electrocatalyst comprising the existing platinum metal particles is used in a fuel cell, the platinum metal particles in use are degraded due to exposure to CO, or the platinum metal particles are stuck to one another when repeatedly exposed to an atmosphere of 100°C or higher, or the platinum metal particles are grown larger. The catalytic function of such an electrocatalyst tends to markedly lower since the above drawbacks can not be perfectly prevented. There is a further problem that the use of platinum in the existing electrocatalyst of this type is disadvantageous in cost and also leads to the exhaustion of platinum. It is therefore an urgent subject matter to decrease the amount of platinum to be used.

The present invention has been developed in order to overcome the above-discussed problems, and objects of the present invention are therefore to provide fine particle-supporting carbon particles which have high corrosion resistance and can be used as a substitute for the existing platinum-supporting carbon particles or platinum metal particles commonly used in the electrocatalysts of fuel cells and which are useful to significantly reduce the amount of platinum as a precious resource, as compared with the existing platinum-supporting carbon particles, and to provide a process for manufacturing the same.

### MEANS FOR SOLVING THE PROBLEMS

To solve the above problems, according to the fine particle-supporting carbon particles of the present invention, the fine particles of a metal oxide of the formula: MOx (x = 0.5 to 2.0) of which a part of the metal element M is substituted by a noble metal element are carried on carbon particles. In more concrete, the above fine particles are of such a metal oxide in which the metal element M comprises a plurality of different metal elements of which at least one is a noble metal element. Preferably, the fine particle-supporting carbon particles of the present invention is such that the fine particles of a metal oxide which has an average crystallite size of from 1 nm inclusive to 20 nm inclusive and which contains a noble metal element in its crystal lattice, maintained in a state of a monodispersion of primary particles, are carried on carbon particles with an average particle diameter of from 20 to 70 nm. In this regard, the term "monodispersion" herein used means a state of a dispersion of primary particles.

To provide such fine particle-supporting carbon particles, the present inventors prepared a solution containing mixed complex ions of constituent metals and adsorbed this solution onto the surfaces of carbon particles, and subjected such carbon particles to a heat treatment. The present inventors found that, by this procedure, the fine particles of a noble metal-containing metal oxide (represented by the formula: MOx in which the metal element M comprises a plurality of different metal elements of which at least one is a noble metal element), maintained in a state of a monodispersion of primary particles, can be carried on the carbon particles. By this finding, the present inventors have succeeded in the development of fine particle-supporting carbon particles which any of the conventional manufacturing processes have been impossible to provide, that is, fine particle-supporting carbon particles in which the fine particles of a noble metal-containing metal oxide, with an average crystallite size of from 1 nm inclusive to 20 nm inclusive, are carried on carbon particles.

The process of the present invention is characterized by the steps of firstly preparing a solution containing the complex ions of metals constituting the fine metal oxide particles, and dispersing carbon particles in the resulting solution to adsorb the complex ions of the metals onto the carbon particles, so as to obtain the above-described fine particle-supporting carbon particles. In this case, preferably, the carbon particles which have had the complex ions of the metals have adsorbed thereonto are further subjected to a hydrothermal treatment to thereby deposit and support the fine particles of the metal oxide which contains the noble metal element in its crystal lattice, on the surfaces of the carbon particles.

### EFFECT OF THE INVENTION

In the fine particle-supporting carbon particles of the present invention, a noble metal element having a catalytic function, in the form of ions thereof but not in the form of metal particles, is carried on the carbon particles, so as to improve the corrosion resistance of an electrocatalyst which comprises the fine particle-supporting carbon particles (mainly, an electrocatalyst for a fuel cell). It is commonly believed that a noble metal element, if not present in the state of metal particles, can not exhibit an excellent catalytic function. However, in the present invention, a noble metal element which has the above-described catalytic function is allowed to be present in the form of ions, but not metal particles, in the crystal lattice. For this reason, when the fine particle-supporting carbon particles are used in an electrocatalyst, the noble metal element in the fine particle is forcedly exposed to oxidizing and reducing atmospheres by making use of the migration of electrons under the application of a voltage in a service environment: that is, the noble metal element is deposited as metal particles under the reducing condition, while the noble metal element is again paresent as a solid solution in the oxide as the host crystal under the oxidizing condition, and this cycle of forming the metal particles and the solid solution is repeated. Therefore, such an electrocatalyst can have an improved durability, since the sticking of noble meal elements and the grain growth thereof can be prevented by such repeated cyclic reactions.

According to the present invention, as described above, there are provided fine particle-supporting carbon particles which can be used as a substitute for the existing platinum-supporting carbon particles commonly used in the electrocatalysts of fuel cells. When the fine particle-supporting carbon particles of the present invention are used as a substitute for such existing particles, the amount of platinum as a precious resource to be used can be significantly reduced, in comparison with the use of the conventional catalytic materials of electrodes.

### BRIEF DESCRIPTION OF THE DRAWINGS

Fig. 1 shows a schematic sectional view of an membrane electrode assembly (MEA) for use in a solid electrolytic type fuel cell, illustrating the common structure thereof.
Fig. 2 shows a graph indicating the X-ray powder diffraction spectrum of carbon particles which support thereon (Ce_{0.95}Pt_{0.05})O₂ particles with a size of about 7 nm obtained in Example 1.
Fig. 3 shows a TEM photograph (magnification: 3,000,000) of the carbon particles which support thereon (Ce_{0.95}Pt_{0.05})O₂ particles with a size of about 7 nm obtained in Example 1.
Fig. 4 shows a graph indicating the X-ray powder diffraction spectrum of carbon particles which support thereon (Ce_{0.76}Zr_{0.19}Pt_{0.05})O₂ particles with a size of about 3 nm obtained in Example 8.

### DESCRIPTION OF REFERENCE NUMERALS

- 1 =: a solid polymer electrolytic membrane
- 2 =: an air electrode
- 3 =: a fuel electrode
- 4 =: a gas diffusion layer for the air electrode
- 5 =: a gas diffusion layer for the fuel electrode
- 10 =: a membrane electrode assembly (MEA)

### BEST MODES FOR CARRYING OUT THE INVENTION

According the process of the present invention, fine particle-supporting carbon particles are manufactured by the steps of previously preparing a solution containing complex ions of metals; dispersing carbon particles in the resulting solution to adsorb the complex ions of the metals onto the surfaces of the carbon particles; drying the dispersion to deposit fine particles of the precursor of a metal oxide on the surfaces of the carbon particles; and subjecting the dried dispersion to a heat treatment.

By the above method of adsorbing the complex ions of the metals onto the surfaces of the carbon particles, the present inventors have successfully carried on carbon carriers the fine particles with an average crystallite size of from 1 to 20 nm of a metal oxide which contains a noble metal element such as platinum in the crystal lattice, maintained in a monodispersion of the primary particles.

The fine particle-supporting carbon particles thus obtained are used as a functional material usable in electrocatalysts for fuel cells or the like. In the present invention, noble metal elements such as platinum useful as the electrocatalysts of fuel cells, which are in the states of ions but not metals, are contained in the crystal lattices of metal oxides. Consequently, in use, the noble metal elements are not stuck to one another or are not grown. Therefore, the fine particle-supporting carbon particles of the present invention are expected to be used as electrocatalysts with superior durability. Far superior catalytic function is further expected to be exhibited by selecting a specific metal oxide having a function as a co-catalyst for the host crystal.

Hereinafter, the process for manufacturing the fine particle-supporting carbon particles of the present invention will be described in more detail.
Firstly, a solution containing complex ions of metals which constitute a noble metal-containing metal oxide [represented by the formula: MOx (x = 0.5 to 2.0) wherein the metal element M comprises a plurality of different metal elements of which at least one is a noble metal element] is prepared. As the metal element M constituing the metal oxide, at least one metal element is selected from cerium, zirconium, titanium, aluminum, magnesium, silicon, etc. However, the metal element M is not limited to these metal elements, in so far as such a metal element can stably contain a noble metal element. It is preferable to contain cerium to exhibit the function as a co-catalyst to the maximum. The noble metal is not limited, in so far as it can exhibit a catalytic function as an electrode for a fuel cell. However, it is preferable to use any of platinum, ruthenium, palladium and gold in order to exhibit superior characteristics, and the use of platinum is the most preferable. The content of the noble metal element in the metal oxide is preferably from 4 to 50 at.%, more preferably from 4 to 30 at.%. When the content of the noble metal element is smaller than 4 at.%, the function as a catalyst is not likely to be sufficiently exhibited. The content of the noble metal element may be larger than 50 at.%, if such a content of the noble metal element can substitute in the crystal lattice of the metal oxide. However, such a large content of the noble metal element is hard to substitute in the metal oxide, and undesirably, a part of the noble metal element which fails to substitute is separated and deposited as noble metal particles.

As the complex of the metals, there are exemplified complexes containing inorganic substances such as complexes of chlorides and amine nitrate, and complexes containing organic substances such as complexes of citric acid, malic acid and picolinic acid, from which a suitable one to be present as ions thereof in a solution is selected in accordance with metal elements to be used. In this case, it is not preferable to contain, in the solution, a metal other than the intended metals: for example, when a complex of a metal salt such as rubinium salt or cesium salt selected from the existing complex compounds is simply dissolved, undesirably, a metal element other than the intended metal elements is contained in the solution. The complex of citric acid is particularly preferred among the above complexes, since the adsorption efficiency of the complex onto the surfaces of the carbon particles is good.

Next, carbon particles such as carbon particles of acetylene black such as DENKA BLACK® available from DENKA, furnace carbon such as VULCAN® from CABOT, or ketjenblack are dispersed in the solution containing the ions of the above metal complex. The average particle diameter of the carbon particles is preferably from 20 to 70 nm. The use of carbon particles with an average particle diameter of smaller than 20 nm arises no problem in the catalytic function of the fine particle-supporting carbon particles as a final product. However, the aggregation of such carbon particles more certainly occurs in the course of the synthesis, and undesirably, it becomes difficult to uniformly disperse such carbon particles. On the other hand, when the average particle diameter of the carbon particles is larger than 70 nm, the catalytic function of the fine particle-supporting carbon particles as a final product is not perfectly lost, however, the specific surface areas thereof become smaller, for which the catalytic function undesirably becomes lower.

The average particle diameter of the carbon particles is determined by averaging the particle diameters of 100 carbon particles on a transmission electron microscopic (TEM) photograph. In this regard, the carbon particles are dispersed in the solution so that the content of the metal elements in the solution can be adjusted so as to control the content of the noble metal-containing metal oxide in the final product, i.e., the fine particle-supporting carbon particles to 5 to 50% by weight. When the amount of the fine particles carried on the carbon particles is smaller than 5% by weight, the amount of the noble metal element in a catalyst as a whole becomes smaller, which is likely to make it hard to exhibit the function of the noble metal element. On the other hand, when the amount of the fine particles carried on the carbon particles exceeds 50% by weight, the fine particles can not be deposited on the surfaces of the carbon particles as a single layer, since the content of the noble metal-containing metal oxide is increased. As a result, the superposition of the fine particles of the noble metal-containing metal oxide on one another or the aggregation thereof is likely to occur.

The complex ions of the metals are adsorbed onto the surfaces of the carbon particles as described above, and such carbon particles are then dried so that the fine particles of the precursor of the noble metal-containing metal oxide are deposited on the surfaces of the carbon particles. The metal complex particles adsorbed onto the surface of the carbon particles are in the state of ions and are dispersed in a molecular level in the solution. Therefore, the metal complex particles kept in this dispersed state can be adsorbed onto the adsorption points of the carbon particles. When such carbon particles are dried, only the complexes the nearest to each other are crystallized to make it possible to deposit the particles of the precursor of the noble metal-containing metal oxide, with a crystallite size of 20 nm or less. The atmosphere for drying the carbon particles is not limited. However, drying in an air is preferable since it is the simplest and costs lower.

The fine particle-supporting carbon particles thus obtained are further subjected to a heat treatment. As the heat treatment, there is employed a hydrothermal treatment for causing a reaction in an aqueous solution under conditions of high temperature and high pressure, or a heat treatment at not higher than 300°C in an air, or a heat treatment under an atmosphere of an inert gas such as nitrogen, argon or the like. Preferably, a hydrothermal treatment is carried out at not higher than 300°C. A hydrothermal treatment at a temperature above 300°C arises no problem, however, undesirably, a special apparatus becomes necessary so as to withstand a high pressure.
When the heat treatment is carried out at a temperature above 300°C under an atmosphere containing oxygen, the carbon particles as the carriers are likely to be burnt. When the heat treatment is carried out under a reducing atmosphere, the precursor particles adsorbed onto the carbon particles are not likely to form an oxide. The temperature for the heat treatment under an inert gas atmosphere is preferably from 200 to 1,000°C. From these heat treatments, a most suitable one to form an oxide from a precursor of a noble metal-containing metal oxide is selected. As the case may be, at least two kinds of heat treatments selected therefrom may be optionally employed in combination: for example, when particles of a platinum-containing cerium oxide are carried on carbon particles, the carbon particles treated as above are subjected to a hydrothermal treatment at 180°C, and are filtered, dried and subjected to a heat treatment at 600°C under a nitrogen atmosphere. In this case, the hydrothermal treatment is effective to make it easy to contain the platinum element as a solid solution in the crystal lattice of the cerium oxide, and the subsequent heat treatment is carried out to crystallize and stabilize the oxide. In this regard, when the heat treatment is carried under a nitrogen atmosphere of not lower than 800°C, the particles of the cerium oxide are sintered to one another, which makes it difficult to maintain the oxide particles of nano size. In this sense, it is essential to carry out the heat treatment under conditions optimal for each of the various compositions.

The fine particle-supporting carbon particles with an average particle diameter of from 20 to 90 nm, which support the fine particles of the metal oxide containing the noble metal element such as a platinum element, with an average crystallite size of from 1 to 20 nm, can be obtained by the above-described process. The average particles size of the fine particle-supporting carbon particles is determined by averaging the particle diameters of 100 particles observed on the TEM photograph. It is considered that the above-described noble metal-containing metal oxide particles with an average crystallite size of smaller than 1 nm also can exhibit the characteristics as a catalyst. However, the lattice intervals of metal oxides are mostly about 0.5 nm (5 Å).
From the viewpoint of the crystalline structure, too small a number of lattice points leads to difficulty to form stable bonds, and thus, it becomes difficult to maintain the structure of the oxide and simultaneously very difficult to form such a structure for the above-described reason. When the average crystallite size exceeds 20 nm, the characteristics as a catalyst are not perfectly lost, while a sufficient specific surface area can not be obtained from such particles, and thus, the catalytic function tends to degrade.

For the above-described reasons, it is important that the average crystallite size of the fine particles of the metal oxide which contains a platinum element or the like in the crystal lattice should be from 1 to 20 nm. It is rare that a single fine particle with a crystallite size of smaller than 20 nm singly has a polycrystalline structure, and a fine particle is mostly a monocrystalline particle. Accordingly, the average particle diameter of the fine particles carried on the carbon particles can be determined from the average crystallite size found by a X-ray powder diffraction spectrum other than from the TEM photograph. Particularly in case of fine particles with a particle diameter of not larger than several nm, an error in measurement of particle diameters by way of visual observation of a TEM photograph is large, and therefore, it is preferable to determine the particle diameter from an average crystallite size.
However, in case where the particles include coarse particles having polycrystalline structures, there is possibility to measure the sizes of the crystallites contained in such coarse particles. Therefore, it is necessary to confirm conformity between the particle diameter found from the average crystallite size and the particle size observed with TEM.

Next, a membrane electrode assembly (MEA) for use in a fuel cell, manufactured using the fine particle-supporting carbon particles, will be described as a specific example of the electrode of a fuel cell using the fine particle-supporting carbon particles of the present invention as an electrocatalyst.

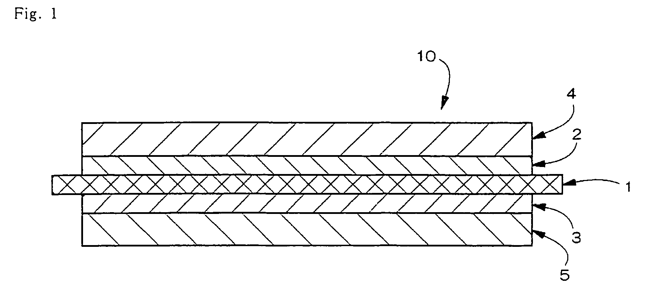

Fig. 1 shows the schematic cross section of a membrane electrode assembly (MEA) for a fuel cell. This membrane electrode assembly 10 comprises an air electrode 2 disposed on one side of a solid polymer electrolytic membrane 1 in the thickness direction, a fuel electrode 3 disposed on the other side thereof, a gas-diffusion layer 4 for the air electrode, disposed outside the air electrode 2, and a gas-diffusion layer 5 for the fuel electrode, disposed outside the fuel electrode 3. As the solid polymer electrolytic membrane 1, there can be used polyperfluorosulfonic acid resin membranes such as "Nafion®" of DuPont, "Flemion®" of Asahi Glass Company Ltd., "Asiplex®" of Asahi Chemical Industry Co., Ltd., etc. As the gas-diffusion layers 4 and 5, porous carbon cloths or carbon sheets can be used. The following general method can be employed to manufacture this membrane electrode assembly 10.

Catalyst-supporting carbon particles, a polymer material, and if needed, a binder are mixed into a solvent comprising a lower alcohol such as ethanol or propanol as a main component, and they are dispersed with a general disperser such as a magnetic stirrer, ball mill, ultrasonic disperser or the like to prepare a catalytic coating. In this step, the amount of the solvent is adjusted to optimize the viscosity of the coating in accordance with the coating method. Next, the obtained catalytic coating is used to form the air electrode 2 or the fuel electrode 3. As the procedure thereafter, any of the following three methods (1) to (3) is employed. Any of these methods may be employed as the means for evaluating the fine particle-supporting carbon particles of the present invention. However, it is important that any of the methods should be consistently employed for the evaluation, when the comparative evaluation of the particles is made.

(1) A bar coater or the like is used to uniformly apply the obtained catalytic coating to a releasable substrate such as a polytetrafluoroethylene (PTFE) film, polyethylene terephthalate (PET) film, polyimide film, PTFE coated polyimide film, PTFE coated silicon sheet, PTFE coated glass cloth or the like; and the catalytic coating is dried to form an electrode membrane on the releasable substrate. The electrode membrane is peeled off and is cut into pieces with predetermined electrode sizes. Two kinds of such electrode membranes are prepared to be used as an air electrode and a fuel electrode, respectively. After that, the electrode membranes are jointed on both sides of a solid polymer electrolytic membrane, respectively, by hot press or hot roll press; and then, the gas-diffusion layers are disposed outside the air electrode and the fuel electrode, respectively, and all of them are jointed together by hot press to provide a membrane electrode assembly.

(2) The obtained catalytic coating is applied to a gas-diffusion layer for an air electrode and a gas-diffusion layer for a fuel electrode, respectively, and is then dried to form an air electrode and a fuel electrode. In this step, spray coating or screen printing is employed as the coating method. Next, the gas-diffusion layers having these electrode membranes formed thereon, respectively, are allowed to hold a solid polymer electrolytic membrane therebetween, and all of them are jointed together by hot press to provide a membrane electrode assembly.

(3) The obtained catalytic coating is applied to both sides of a solid polymer electrolytic membrane by spray coating or the like, and is then dried to form an air electrode and a fuel electrode. After that, gas-diffusion layers are formed outside the air electrode and the fuel electrode, and all of them are jointed together by hot press to provide a membrane electrode assembly.

Current collector plates (not shown) are provided on the sides of the air electrode 2 and the fuel electrode 3 of the resultant membrane electrode assembly 10 shown in Fig. 1, respectively, and are electrically connected thereto; and then, a hydrogen gas and an air (an oxygen gas) are supplied to the fuel electrode 3 and the air electrode 2, respectively, to thereby actuate the resultant fuel cell.

### Example 1

### <Carbon particles supporting 20% by weight of platinum (Pt: 5%)-substituted cerium oxide>

Cerium chloride heptahydrate (2.53 g) was dissolved in water (100 ml), and a triequivalent amount of citric acid in terms of cerium was added to the solution to thereby prepare an aqueous solution containing citrate complex ions of cerium. Next, VULCAN XC-72® (carbon black with an average particle diameter of 30 nm available from CABOT) (5 g) was added to this aqueous solution and was dispersed therein by means of ultrasonic wave. The resultant dispersion was stirred for 2 hours to adsorb the complex ions onto the surfaces of the VULCAN particles. After that, the resultant carbon particles were subjected to a hydrothermal treatment at 180°C for 5 hours, and were then dried at 90°C to obtain carbon particles each supporting a compound of cerium thereon.

Next, hydrogen hexachloroplatinate hexahydrate (0.19 g) was dissolved in ethanol (30 g) to prepare an ethanol solution containing platinum. The carbon particles (powder) which carried thereon the cerium compound particles obtained as above were impregnated with this ethanol solution and dried at 60°C, and were then subjected to a heat treatment at 600°C under a nitrogen atmosphere, to obtain carbon particles which carried thereon particles of a cerium oxide which was partially substituted by platinum: (Ce_{0.95}Pt_{0.05})O₂.

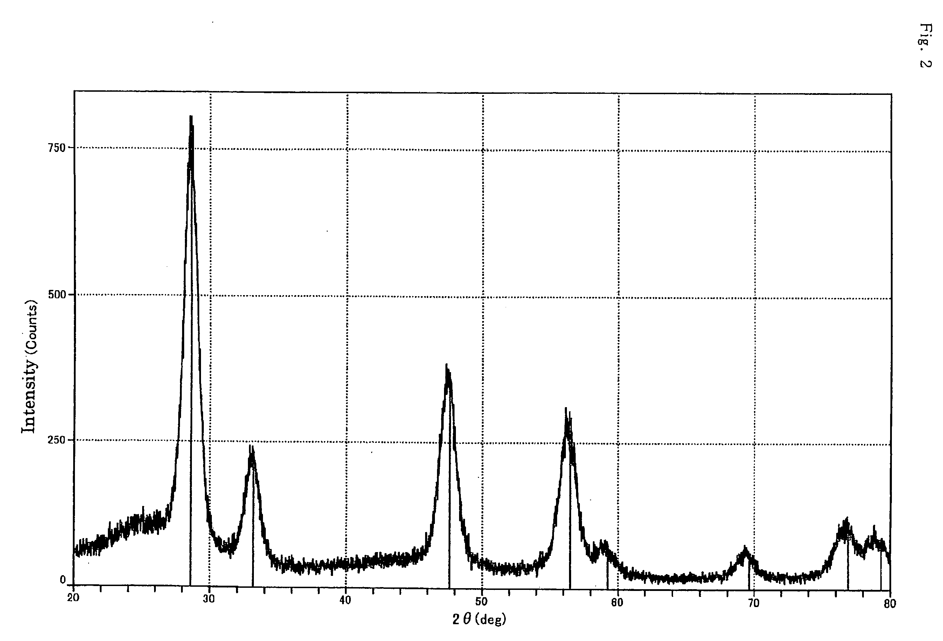

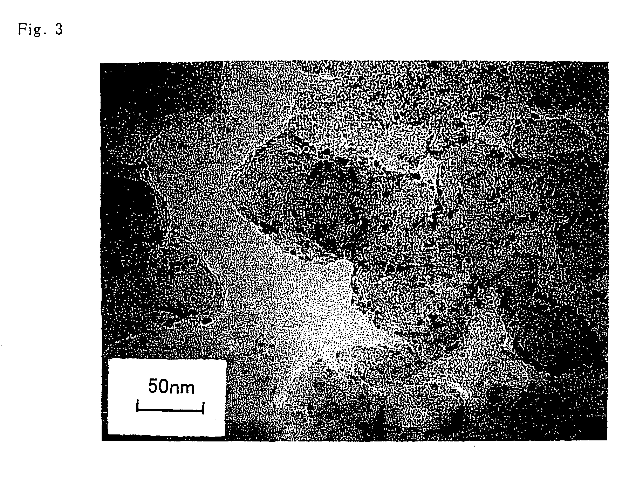

The carbon particles supporting the (Ce_{0.95}Pt_{0.05})O₂ particles thereon, thus obtained, were subjected to a X-ray powder diffraction spectrometry. As a result, the peaks of the definite single phase of a cerium oxide structure as shown in Fig. 2 were observed. Since no peak indicating a structure attributed to a simple substance of platinum was observed despite of the fact that the platinum element was contained, it was found that the platinum element was taken into the crystal lattice of the cerium oxide. The average crystallite size determined from the half value widths of the diffraction peaks was 6.2 nm. As a result of the observation with a transmission electron microscope (TEM), it was confirmed that the particles of the composite metal oxide, with a size of about 5 to about 8 nm, were carried on the surfaces of the carbon particles, as shown in Fig. 3.

### Example 2

### <Carbon particles supporting 20% by weight of platinum-substituted (Pt: 40%) cerium oxide>

Cerium chloride heptahydrate (1.44 g) and hydrogen hexachloroplatinate hexahydrate (1.33 g) were dissolved in water (100 ml), and an equivalent amount of citric acid in terms of cerium ions and platinum ions was added to the solution to thereby prepare an aqueous solution containing citrate complex ions of cerium and platinum.

Next, VULCAN XC-72® (carbon black with an average particle diameter of 30 nm available from CABOT) (5 g) was impregnated with this aqueous solution containing the citrate complex ions of cerium and platinum to adsorb the complex ions onto the surfaces of the VULCAN particles. The resulting carbon particles were dried at 90°C, and were then subjected to a heat treatment at 700°C under a nitrogen atmosphere, to obtain carbon particles which carried thereon particles of a cerium oxide which was substituted by platinum: (Ce_{0.6}Pt_{0.4})O₂.

The carbon particles supporting the (Ce_{0.6}Pt_{0.4})O₂ particles thereon, thus obtained, were subjected to a X-ray powder diffraction spectrometry. As a result, the peaks of the definite single phase of a cerium oxide structure as in Example 1 were observed, while the peak positions were shifted because a lot of platinum was used for substitution. Thus, it was found that the platinum element was taken into the crystal lattice of the cerium oxide. The average crystallite size determined from the half value widths of the diffraction peaks was 17.9 nm.
As a result of the observation with a transmission electron microscope (TEM), it was confirmed that the particles of the composite metal oxide, with a size of about 15 to about 18 nm, were carried on the surfaces of the carbon particles.

### Example 3

### <Carbon particles supporting 20% by weight of ruthenium-substituted (Ru: 5%) cerium oxide>

Carbon particles which carried thereon particles of a ruthenium-substituted cerium oxide: (Ce_{0.95}Ru_{0.05})O₂ were obtained in the same manner as in Example 1, except the following: in the process of Example 1, carbon particles supporting particles of a cerium compound were obtained in the same manner as in Example 1, and were impregnated with an aqueous solution of ruthenium chloride trihydrate (0.09 g) in water (30 g).

The carbon particles supporting (Ce_{0.95}Ru_{0.05})O₂ particles thereon, thus obtained, were subjected to a X-ray powder diffraction spectrometry. As a result, the peaks of the definite single phase of a cerium oxide structure were observed as in Example 1, and it was confirmed that the ruthenium element was taken into the crystal lattice of the cerium oxide. The average crystallite size determined from the half value widths of the diffraction peaks was 11.4 nm. As a result of the observation with a transmission electron microscope (TEM), it was confirmed that the particles of the composite metal oxide, with a size of about 10 nm, were carried on the surfaces of the carbon particles.

### Example 4

### <Carbon particles supporting 20% by weight of platinum-substituted (Pt: 5%) titanium oxide>

Carbon particles supporting fine particles of a platinum-substituted titanium oxide: (Ti_{0.95}Pt_{0.05})O₂ were obtained in the same manner as in Example 1, except that titanium tetrachloride (1.29 g) was dissolved in water (100 ml) instead of the cerium chloride heptahydrate, in the process of Example 1.

The carbon particles supporting the (Ti_{0.95}Pt_{0.05})O₂ particles thereon, thus obtained, were subjected to a X-ray powder diffraction spectrometry. As a result, the peaks of the definite single phase of the rutile structure of titanium oxide were observed, and it was confirmed that the platinum element was taken into the crystal lattice of the titanium oxide. The average crystallite size determined from the half value widths of the diffraction peaks was 10.1 nm. As a result of the observation with a transmission electron microscope (TEM), it was confirmed that the particles of the composite metal oxide, with a size of about 10 nm, were carried on the surfaces of the carbon particles.

### Example 5

### <Carbon particles supporting 20% by weight of platinum- and ruthenium-substituted (Pt: 10% and Ru: 5%) cerium oxide>

Carbon particles supporting particles of a platinum- and ruthenium-substituted cerium oxide: (Ce_{0.85}Pt_{0.1}Ru_{0.05})O₂ were obtained in the same manner as in Example 1, except that the cerium compound-supporting carbon particles obtained in the same manner as in Example 1 were impregnated with an aqueous solution of hydrogen hexachloroplatinate hexahydrate (0.41 g) and ruthenium chloride trihydrate (0.10 g) in water (40 g) in the process of Example 1.

The carbon particles supporting the (Ce_{0.85}Pt_{0.1}Ru_{0.05})O₂ particles thereon, thus obtained, were subjected to a X-ray powder diffraction spectrometry. As a result, the peaks of the definite single phase of the structure of cerium oxide were observed as in Example 1, and it was confirmed that the platinum element and the ruthenium element were taken into the crystal lattice of the cerium oxide. The average crystallite size determined from the half value widths of the diffraction peaks was 14.7 nm. As a result of the observation with a transmission electron microscope (TEM), it was confirmed that the particles of the composite metal oxide, with a size of about 10 nm, were carried on the surfaces of the carbon particles.

### Example 6

### <Carbon particles supporting 20% by weight of platinum-substituted (Pt: 5%) zirconium oxide>

Carbon particles supporting particles of a platinum-substituted zirconium oxide: (Zr_{0.95}Pt_{0.05})O₂ were obtained in the same manner as in Example 1, except that zirconium chloride (1.58 g) was dissolved in water (100 ml) instead of the cerium chloride heptahydrate, in the process of Example 1.

The carbon particles supporting the (Zr_{0.95}Pt_{0.05})O₂ particles thereon, thus obtained, were subjected to a X-ray powder diffraction spectrometry. As a result, the peaks of the definite single phase of the structure of tetragonal zirconium oxide were observed, and it was confirmed that the platinum element was taken into the crystal lattice of the titanium oxide. The average crystallite size determined from the half value widths of the diffraction peaks was 8.5 nm. As a result of the observation with a transmission electron microscope (TEM), it was confirmed that the particles of the composite metal oxide, with a size of from about 8 to about 10 nm, were carried on the surfaces of the carbon particles.

### Example 7

### <Carbon particles supporting 20% by weight of palladium-substituted (Pd: 5%) cerium oxide>

Carbon particles supporting particles of a palladium-substituted cerium oxide: (Ce_{0.95}Pd_{0.05})O₂ were obtained in the same manner as in Example 1, except that the cerium compound-supporting carbon particles obtained in the same manner as in Example 1 were impregnated with an aqueous solution of potassium hexachloropalladate (0.14 g) in water (30 g) in the process of Example 1.

The carbon particles supporting the (Ce_{0.95}Pd_{0.05})O₂ particles thereon, thus obtained, were subjected to a X-ray powder diffraction spectrometry. As a result, the peaks of the definite single phase of the structure of cerium oxide were observed, and it was confirmed that the palladium element was taken into the crystal lattice of the cerium oxide as in Example 1. The average crystallite size determined from the half value widths of the diffraction peaks was 12.7 nm. As a result of the observation with a transmission electron microscope (TEM), it was confirmed that the particles of the composite metal oxide, with a size of from about 10 to about 15 nm, were carried on the surfaces of the carbon particles.

### Example 8

### <Carbon particles supporting 40% by weight of platinum-substituted (Pt: 5%) cerium-zirconium oxide>

Carbon particles supporting particles of platinum-substituted cerium-zirconium oxide: (Ce_{0.76}Zr_{0.19}Pt_{0.05})O₂ were obtained in the same manner as in Example 1, except the following: cerium chloride heptahydrate (2.22 g) and zirconium chloride oxide octahydrate (0.48 g) were dissolved in water (50 ml), and citric acid was added to the solution to prepare an aqueous solution containing citrate complex ions of cerium and zirconium; VULCAN XC-72 particles (2 g) were dispersed in this aqueous solution to obtain carbon particles supporting particles of a compound of cerium and zirconium in the same manner as in Example 1; and an ethanol solution of platinum was prepared by dissolving hydrogen hexachloroplatinate hexahydrate (0.20 g) in ethanol (30 g).

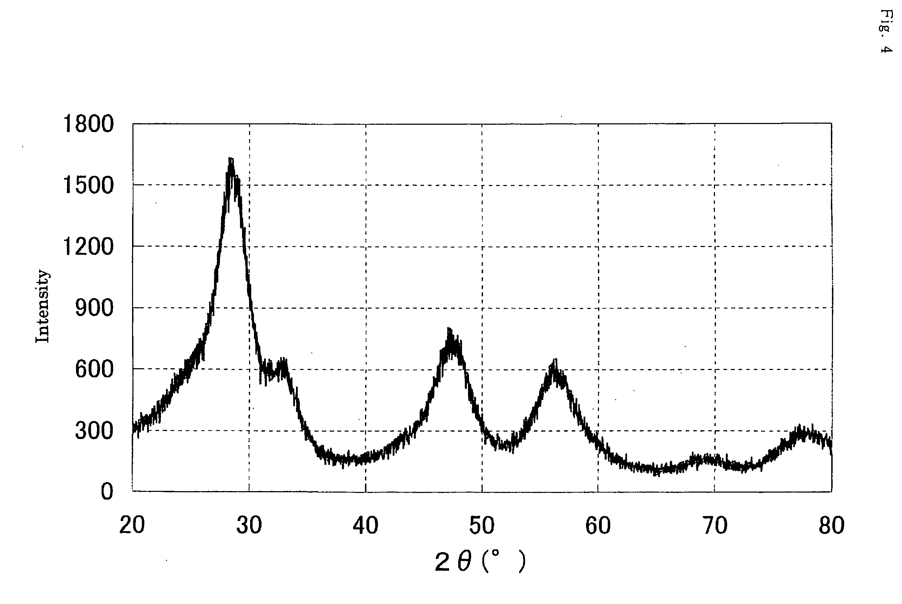

The carbon particles supporting the (Ce_{0.76}Zr_{0.19}Pt_{0.05})O₂ particles thereon, thus obtained, were subjected to a X-ray powder diffraction spectrometry. As a result, the peaks of the definite single phase of the cerium oxide structure of cerium-zirconium composite oxide were observed, and it was confirmed that the platinum element was taken into the crystal lattice of the cerium oxide. The average crystallite size determined from the half value widths of the diffraction peaks was 3 nm. As a result of the observation with a transmission electron microscope (TEM), it was confirmed that the particles of the composite metal oxide, with a size of from about 2 to about 4 nm, were carried on the surfaces of the carbon particles. The X-ray diffraction spectrum is shown in Fig. 4.

### Example 9

### <Carbon particles supporting 40% by weight of platinum-substituted (Pt: 25%) cerium-zirconium oxide>

Carbon particles supporting particles of platinum-substituted cerium-zirconium oxide: (Ce_{0.6}Zr_{0.15}Pt_{0.25})O₂ were obtained in the same manner as in Example 1, except the following: in the process of Example 1, cerium chloride heptahydrate (1.62 g) and zirconium chloride oxide octahydrate (0.35 g) were dissolved in water (50 ml), and citric acid was added to the solution to prepare an aqueous solution containing citrate complex ions of cerium and zirconium; VULCAN XC-72 particles (2 g) were dispersed in this aqueous solution to obtain carbon particles supporting particles of a compound of cerium and zirconium in the same manner as in Example 1; and an ethanol solution of platinum was prepared by dissolving hydrogen hexachloroplatinate hexahydrate (0.94 g) in ethanol (30 g).

The carbon particles supporting the (Ce_{0.6}Zr_{0.15}Pt_{0.25})O₂ particles thereon, thus obtained, were subjected to a X-ray powder diffraction spectrometry. As a result, the peaks of the definite single phase of the structure of cerium-zirconium composite oxide were observed, and it was confirmed that the platinum element was taken into the crystal lattice of the cerium oxide structure.
The average crystallite size determined from the half value widths of the diffraction peaks was 7.6 nm. As a result of the observation with a transmission electron microscope (TEM), it was confirmed that the particles of the composite metal oxide, with a size of from about 7 to about 8 nm, were carried on the surfaces of the carbon particles.

### Example 10

### <Carbon particles supporting 40% by weight of platinum- and ruthenium-substituted (Pt: 3% and Ru: 3%) cerium-zirconium oxide>

Carbon particles supporting particles of platinum-and ruthenium-substituted cerium-zirconium oxide: (Ce_{0.75}Zr_{0.19}Pt_{0.03}Ru_{0.03})O₂ were obtained in the same manner as in Example 1, except the following: in the process of Example 1, cerium chloride heptahydrate (2.22 g) and zirconium chloride oxide octahydrate (0.48 g) were dissolved in water (50 ml), and citric acid was added to the solution to prepare an aqueous solution containing citrate complex ions of cerium and zirconium; VULCAN XC-72 particles (2 g) were dispersed in this aqueous solution to obtain carbon particles supporting particles of a compound of cerium and zirconium in the same manner as in Example 1; and an ethanol solution of platinum and ruthenium was prepared by dissolving hydrogen hexachloroplatinate hexahydrate (0.12 g) and ruthenium chloride trihydrate (0.06 g) in ethanol (30 g).

The carbon particles supporting the (Ce_{0.75}Zr_{0.19}Pt_{0.03}Ru_{0.03})O₂ particles thereon, thus obtained, were subjected to a X-ray powder diffraction spectrometry. As a result, the peaks of the definite single phase of the structure of cerium-zirconium composite oxide having a cerium oxide structure were observed, and it was confirmed that the platinum element and the ruthenium element were taken into the crystal lattice of the cerium oxide. The average crystallite size determined from the half value widths of the diffraction peaks was 15.9 nm. As a result of the observation with a transmission electron microscope (TEM), it was confirmed that the particles of the composite metal oxide, with a size of about 15 nm, were carried on the surfaces of the carbon particles.

### Example 11

### <Carbon particles supporting 40% by weight of platinum- and ruthenium-substituted (Pt: 20% and Ru: 5%) cerium-zirconium oxide>

Carbon particles supporting particles of platinum-and ruthenium-substituted cerium-zirconium oxide: (Ce_{0.6}Zr_{0.15}Pt_{0.2}Ru_{0.05})O₂ were obtained in the same manner as in Example 1, except the following: in the process of Example 1, cerium chloride heptahydrate (1.67 g) and zirconium chloride oxide octahydrate (0.36 g) were dissolved in water (50 ml), and citric acid was added to the solution to prepare an aqueous solution containing citrate complex ions of cerium and zirconium; VULCAN XC-72 particles (2 g) were dispersed in this aqueous solution to obtain carbon particles supporting particles of a compound of cerium and zirconium in the same manner as in Example 1; and an ethanol solution of platinum and ruthenium was prepared by dissolving hydrogen hexachloroplatinate hexahydrate (0.77 g) and ruthenium chloride trihydrate (0.10 g) in ethanol (30 g).

The carbon particles supporting the (Ce_{0.6}Zr_{0.15}Pt_{0.2}Ru_{0.05})O₂ particles thereon, thus obtained, were subjected to a X-ray powder diffraction spectrometry. As a result, the peaks of the definite single phase of the structure of cerium-zirconium composite oxide were observed, and it was confirmed that the platinum element and the ruthenium element were taken into the crystal lattice of the cerium oxide structure. The average crystallite size determined from the half value widths of the diffraction peaks was 9.7 nm. As a result of the observation with a transmission electron microscope (TEM), it was confirmed that the particles of the composite metal oxide, with a size of about 10 nm, were carried on the surfaces of the carbon particles.

### Example 12

### <Carbon particles supporting 40% by weight of platinum-substituted (Pt: 5%) titanium-zirconium oxide>

Carbon particles supporting particles of platinum- substituted titanium-zirconium oxide: (Ti_{0.75}Zr_{0.19}Pt_{0.05})O₂ were obtained in the same manner as in Example 1, except the following: in the process of Example 1, titanium tetrachloride (1.96 g) and zirconiuim chloride oxide octahydrate (0.83 g) were dissolved in water (50 ml) instead of the cerium chloride heptahydrate, and citric acid was added to the solution to prepare an aqueous solution containing citrate complex ions of titanium and zirconium; VULCAN XC-72 particles (2 g) were dispersed in this aqueous solution to obtain carbon particles supporting particles of a compound of titanium and zirconium in the same manner as in Example 1; and an ethanol solution of platinum was prepared by dissolving hydrogen hexachloroplatinate hexahydrate (0.35 g) in ethanol (30 g).

The carbon particles supporting the (Ti_{0.76}Zr_{0.19}Pt_{0.05})O₂ particles thereon, thus obtained, were subjected to a X-ray powder diffraction spectrometry. As a result, the peaks of the definite single phase of the structure of titanium oxide were observed, and it was confirmed that the zirconium element and the platinum element were taken into the crystal lattice of the titanium oxide structure. The average crystallite size determined from the half value widths of the diffraction peaks was 19.3 nm. As a result of the observation with a transmission electron microscope (TEM), it was confirmed that the particles of the composite metal oxide, with a size of about 20 nm, were carried on the surfaces of the carbon particles.

### Comparative Example 1

### <Carbon particles supporting 20% by weight of platinum-substituted (Pt: 5%) cerium oxide>

Carbon particles supporting particles of platinum- substituted cerium oxide: (Ce_{0.95}Pt_{0.05})O₂ were obtained in the same manner as in Example 1, except that carbon particles supporting particles of a cerium compound obtained in the same manner as in Example 1 were impregnated with an ethanol solution of platinum, dried at 60°C and subjected to a heat treatment at 270°C in an air.

The carbon particles supporting the (Ce_{0.95}Pt_{0.05})O₂ particles thereon, thus obtained, were subjected to a X-ray powder diffraction spectrometry. As a result, very broad amorphous-like peaks of cerium oxide and platinum oxide: PtO₂ were observed, and it was found that the platinum element which was not taken into the crystal lattice of the cerium oxide was separated and deposited as platinum oxide. The average crystallite size of the cerium oxide could not be determined since no clear peak was observed. As a result of the observation with a transmission electron microscope (TEM), the cerium oxide particles with an average particle diameter of 2 nm were observed. The average particle diameter of the platinum oxide particles was found to be about 3 nm, as a result of the observation with a transmission electron microscope (TEM).

### Comparative Example 2

### <Carbon particles supporting 40% by weight of platinum- and ruthenium-substituted (Pt: 3% and Ru: 3%) cerium-zirconium oxide>

Carbon particles supporting particles of platinum- and ruthenium-substituted cerium-zirconium oxide: (Ce_{0.75}Zr_{0.19}Pt_{0.03}Ru_{0.03})O₂ were obtained in the same manner as in Example 10, except that a heat treatment at 1,200°C under a nitrogen atmosphere for one hour was carried out instead of the heat treatment at 600°C under the nitrogen atmosphere in the process of Example 10.

The carbon particles supporting the (Ce_{0.75}Zr_{0.19}Pt_{0.03}Ru_{0.03})O₂ particles thereon, thus obtained, were subjected to a X-ray powder diffraction spectrometry. As a result, the peaks of the definite single phase of the structure of cerium-zirconium composite oxide having a cerium oxide structure were observed, and it was confirmed that the platinum element and the ruthenium element were taken into the crystal lattice of the cerium oxide structure. The average crystallite size determined from the half value widths of the diffraction peaks was 100 nm or more, and the identification of the composite metal oxide was impossible. As a result of the observation with a transmission electron microscope (TEM), the particles of the composite metal oxide, with a size of about 150 nm, and the carbon particles were confirmed.

### Comparative Example 3

### <Carbon particles supporting 20% by weight of CeO₂ particles>

Carbon particles supporting particles of cerium oxide: CeO₂ were obtained as follows: carbon particles supporting particles of a cerium compound were obtained in the same manner as in Example 1, and were then subjected to a heat treatment at 600°C under a nitrogen atmosphere, without being subjected to a platinum-containing treatment.

The carbon particles supporting the CeO₂ particles thereon, thus obtained, were subjected to a X-ray powder diffraction spectrometry. As a result, the definite peaks of the cerium oxide structure as in Example 1 were observed. The average crystallite size determined from the half value widths of the diffraction peaks was 5.8 nm. As a result of the observation with a transmission electron microscope (TEM), the particles of the metal oxide, with a size of from about 5 to about 7 nm, were found to be carried on the surfaces of the carbon particles.

### Comparative Example 4

### <Carbon particles supporting 10% by weight of Pt and 20% by weight of CeO₂>

Carbon particles supporting particles of cerium oxide: CeO₂ and platinum particles were obtained as follows: carbon particles (powder) supporting particles of a cerium compound and platinum particles were obtained in the same manner as in Example 1, except that complex ions of cerium are adsorbed onto the surfaces of platinum-supporting carbon particles which previously had 10% by weight of platinum particles (with an average particle diameter of 5 nm) carried thereon, but not onto the surfaces of VULCAN particles, to obtain carbon particles (powder) supporting particles of a cerium compound and platinum particles thereon; and then, such carbon particles were subjected to a heat treatment at 600°C under a nitrogen atmosphere, without being subjected to a platinum-containing treatment as in Example 1.

The fine particle-supporting carbon particles thus obtained were subjected to a X-ray powder diffraction spectrometry. As a result, the peaks of the structure of the cerium oxide and the platinum metal were observed. The average crystallite sizes determined from the half value widths of the diffraction peaks were 7.6 nm and 5.6 nm, respectively. As a result of the observation with a transmission electron microscope (TEM), the particles of the composite metal oxide, with a size of about 8 nm, and the platinum particles with a size of about 5 nm were found to be carried on the surfaces of the carbon particles.

### Comparative Example 5

### <Carbon particles supporting 10% by weight of PtO>

Carbon particles supporting particles of a platinum oxide: PtO were obtained as follows: VULCAN XC-72 particles (10 g) were impregnated with a platinum ion-containing ethanol solution prepared by dissolving hydrogen hexachloroplatinate hexahydrate (2.70 g) in ethanol (200 ml), dried at 60°C and subjected to a heat treatment at 270°C in an air.

The carbon particles supporting PtO particles thereon thus obtained were subjected to a X-ray powder diffraction spectrometry. As a result, the peaks of the definite single phase of the platinum oxide were observed. The average crystallite sizes determined from the half value widths of the diffraction peaks was 5.2 nm. As a result of the observation with a transmission electron microscope (TEM), the particles of the platinum oxide, with a size of about 5 nm, were found to be carried on the surfaces of the carbon particles.

Table 1 shows the compositions and the characteristics of the fine particle-supporting carbon particles obtained in Examples and Comparative Examples. In this regard, the particle diameter of the carried particles indicates the particle diameter of the carried oxide particles determined from the average crystallite size; the particle diameter found by way of the observation with TEM indicates the approximate particle diameter of the carried oxide particles, which was visually confirmed through the observation with the TEM; and the average particle diameter indicates the average particle diameter of the fine particle-supporting carbon particles determined from an average of the particle diameters of 100 particles on a TEM photograph.

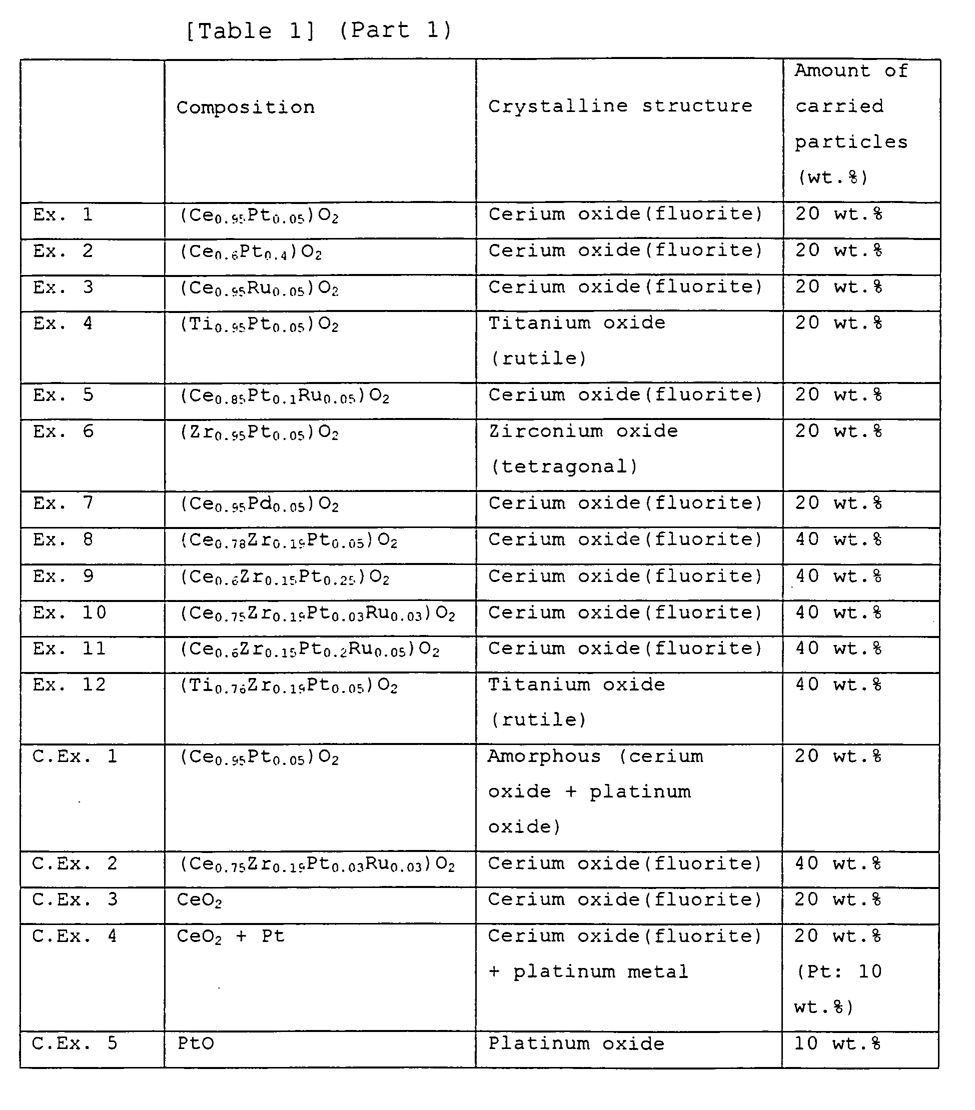

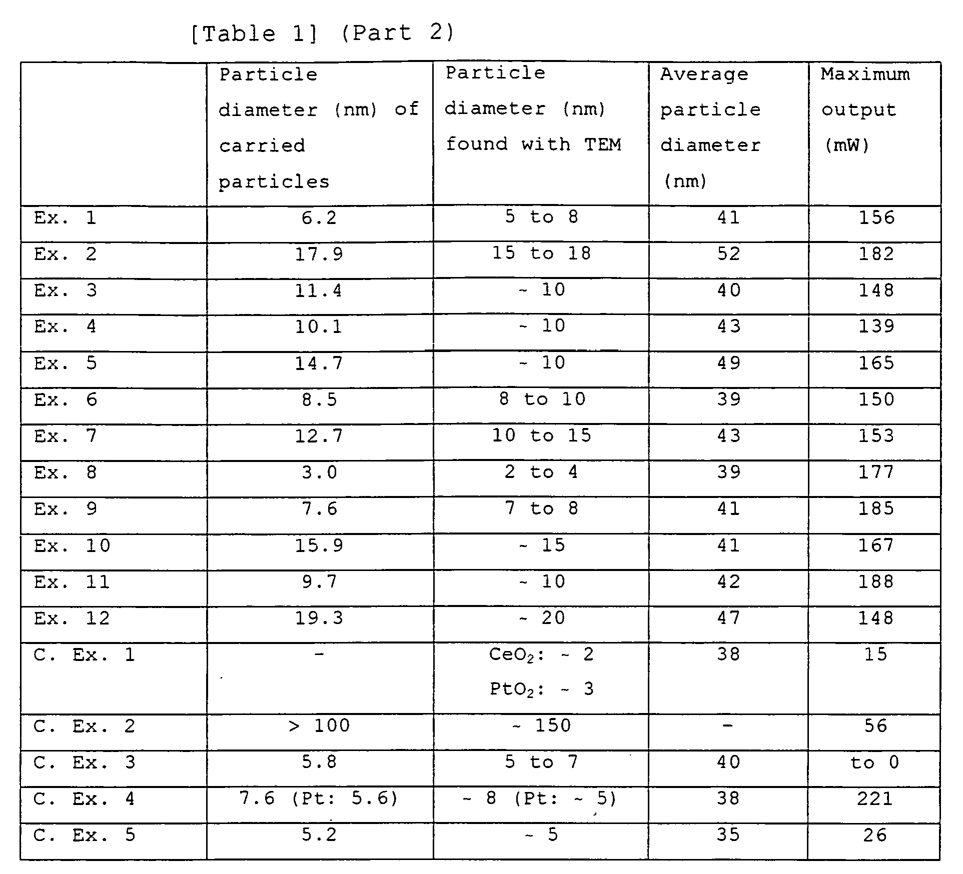

### Example 13

Next, membrane electrode assemblies (MEA) for fuel cells were assembled to evaluate the catalytic characteristics of the fine particle-supporting carbon particles obtained in each of the above-described Examples and Comparative Examples, and output characteristics of fuel cells comprising the same MEAs were evaluated. When the above-described fine particle-supporting carbon particles are used in electrodes constituting a membrane electrode assembly (MEA), the compositions of the oxides for the fine particle-supporting carbon particles (i.e., the composition of fine oxide particles carried on carbon particles) capable of exhibiting maximum effects are different between the air electrode and the fuel electrode. In this Example, the fine particle-supporting carbon particles were used in the fuel electrodes, and the following standard electrode membranes were used as the air electrodes, in order to make consistent evaluation.

### <Electrode membrane comprising fine particle-supporting carbon particles>

The fine particle-supporting carbon particles (1 part by mass) obtained in each of the above-described Examples and Comparative Examples were added to a mixture of "Nafion®" (EW = 1,000, manufactured by Aldrich) (9.72 parts by mass) which was a solution containing 5% by mass of a polyperfluorosulfonic acid resin, "Nafion®" (manufactured by DuPont) (2.52 parts by mass) which was a solution containing 20% by mass of a polyperfluorosulfonic acid resin, and water (1 part by mass); and the resulting mixture was sufficiently stirred and homogenously dispersed to prepare a catalytic coating. Next, the catalytic coating was applied to a PTFE film so that the amount of the carried platinum could be 0.03 mg/cm², and was dried. The dried layer of the catalytic coating was peeled off as an electrode membrane comprising the fine particle-supporting carbon particles.

### <Standard electrode membrane>

A catalytic coating was prepared in the same manner as above, using platinum-supporting carbon particles "10E50E®" (manufactured by Tanaka Kikinzoku Kogyo) which carried 50% by mass of platinum, and was then applied to a PTFE film so that the amount of the carried platinum could be 0.5 mg/cm². The applied catalytic coating was dried and peeled off as a standard electrode membrane.

### <Membrane electrode assembly>

A polyperfluorosulfonic acid resin membrane "Nafion 112®" (manufactured by DuPont) was cut into pieces with a predetermined size for use as a solid polymer electrolytic membrane. The electrode membrane comprising the fine particle-supporting carbon particles and the standard electrode membrane, prepared in advance, were laminated on both sides of the solid polymer electrolytic membrane, respectively, and the resulting lamination was hot-pressed at 160°C under a pressure of 4.4 MPa to joint these membranes. Next, a non-woven carbon cloth which had been previously water-proofed (TGP-H-120 manufactured by Toray Industries, Inc.) and the solid polymer electrolytic membrane having the electrode membranes formed on its both sides were jointed to each other by hot press to obtain a membrane electrode assembly.

### [Evaluation of Output Characteristics]

The output characteristics (i.e., a maximum output density per unit amount of platinum) of a fuel cell comprising the above electrode membrane assembly was measured. In this measurement, a measuring system including the membrane electrode assembly was maintained at 60°C, and the measurement was conducted while supplying a hydrogen gas humidified and heated at 60°C to the fuel electrode side, and an air humidified and heated at 60°C to the air electrode side. The results of the measurements are collectively shown in Table 1 above.

### [Evaluation of Resistance to Oxidation]

To evaluate the resistance of the fine particle-supporting carbon particles to oxidation in an air, the fine particle-supporting carbon particles obtained in Example 11 and Comparative Example 4 were selected as ones having typical compositions; and changes in the physical properties of these carbon particles in an air were measured. Prior to the measurements, the respective fine particle-supporting carbon particles were previsously oxidized at 150°C for 48 hours in an air.

The respective fine particle-supporting carbon particles oxidized as above were subjected to X-ray powder diffraction spectrometry so as to examine their crystalline structures. As a result, the fine particle-supporting carbon particles of Example 11 were observed to have a cerium oxide structure and showed no change in its structure, in comparison with the structure thereof found before the oxidation treatment. On the other hand, the fine particle-supporting carbon particles of Comparative Example 4 were observed to have two phases, i.e., "a cerium oxide structure + a platinum metal structure" before the oxidation treatment, and were observed to have three phases, i.e., "a cerium oxide structure + a platinum metal structure + a platinum oxide structure (PtO)" after the oxidation treatment.

The respective fine particle-supporting carbon particles were further observed with TEM. As a result, it was observed from the fine particle-supporting carbon particles of Example 11 that the particles with a size of about 8 nm were carried on the carbon particles, and that the particle diameter showed almost no change as compared with the particle diameter found before the oxidation treatment. On the other hand, it was observed from the platinum particle-supporting carbon particles of Comparative Example 4 that the oxide particles with a size of about 8 nm and the platinum particles with a size of about 8 to about 9 nm were carried on the carbon particles, and that the particle diameter of the platinum particles was increased as compared with the particle diameter of about 5 nm found before the oxidation treatment.

Next, the respective fine particle-supporting carbon particles which already had been oxidized were used to assemble membrane electrode assemblies in the same manner as in Example 13 so as to evaluate the output characteristics. As a result, the maximum output from the membrane electrode assembly comprising the fine particle-supporting carbon particles of Example 1 was 182 mW, while the maximum output from the membrane electrode assembly comprising the fine particle-supporting carbon particles of Comparative Example 4 was 93 mW.

The results of the evaluation of the resistances to oxidation and the output characteristics are collectively shown in Table 2.

**[Table 2]**

| Results of Evaluation of Resistance to Oxidation | | | | | | |
|---|---|---|---|---|---|---|
| | Crystalline structure | | Particle diameter (nm) of carried particle | | Output characteristics (mW) | |
| | Before Treatment | After Treatment | Before Treatment | After Treatment | Before Treatment | After Treatment |
| Ex. 11 | Cerium oxide | Cerium oxide | 9.7 | 9.8 | 188 | 182 |
| C.EX. 4 | Cerium oxide + platinum metal | Cerium oxide + platinum metal + platinum oxide | 7.6 5.6(pt) | 7.5 8.7(pt) | 221 | 93 |

As is apparent from Table 1, the fine particle-supporting carbon particles obtained in any of the Examples were observed to have a single phase of the crystalline structure and to have an average crystallite size of not larger than 20 nm. On the other hand, it was observed in Comparative Examples 1 and 2 that the platinum elements were not taken into the cerium oxides because of the unsuitable conditions for the heat treatments, so that the platinum oxides were deposited or so that coarse particles of the metal oxide with a particle diameter of 100 nm or more were formed, and thus could not be carried on the carbon particles.

Next, as a result of the evaluation of the characteristics as the fuel electrodes of the fuel cells, the use of the fine particle-supporting carbon particles of the respective Examples was found to enable the apparent generation of electric power. On the other hand, the use of the fine particle-supporting carbon particles of Comparative Examples 1 and 2, having the crystalline structures different from the intended one, was found to markedly lower the output characteristics. The use of the fine particle-supporting carbon particles of Comparative Example 3 was found to be impossible to obtain any output characteristics, even when only the cerium oxide particles were carried on the carbon particles. From this fact, it is known that the characteristics revealed by the use of the fine particle-supporting carbon particles of Examples were not attributed to the oxides. Further, the use of the carbon particles supporting platinum oxide particles PtO alone as indicated in Comparative Example 5 was found to make it hard to obtain sufficient output characteristics, even when the platinum oxide PtO particles alone were carried on the carbon particles. Thus, it is known that particles in a state of simple platinum oxide have almost no catalytic function, as has been considered so far.

The electrode of the fuel cell, comprising the fine particle-supporting carbon particles of Comparative Example 4, was evaluated to have superior characteristics to those of the electrodes comprising the fine particle-supporting carbon particles of the respective Examples. On the other hand, as indicated in Table 2, the fine particle-supporting carbon particles of Example 1, oxidized in an air, showed almost no change in their crystalline structure and average particle diameter, while the platinum particle-supporting carbon particles of Comparative Example 4 showed a change in the crystalline structure, i.e., from the structure of "platinum metal" to the structure of "platinum metal + platinum oxide" and also showed an increase in the average particle diameter, accompanied by a remarkable decrease in the output characteristics.

As has been described above, it is revealed that a platinum element in an oxide form is not degraded due to further oxidation, and also is not degraded due to coarse particles attributed to the aggregation of particles, since the platinum oxide has no platinum-platinum metal bond. From these viewpoints, the present invention provides an important measure to achieve the subject matters, i.e., to prevent the degradation of a catalyst, and to improve the durability of the catalyst to thereby decrease the amount of the catalyst to be used.

The main and preferred embodiments for carrying out the present invention will be described below.
[1] An fine particle-carrying carbon particle comprising a carbon particle and fine particles of a metal oxide with an average crystallite size of from 1 to 20 nm carried on the carbon particle, wherein the metal oxide is represented by the formula: MOx (x = 0.5 to 2.0) in which a part of a metal element M is substituted by a noble metal element.
[2] The fine particle-carrying carbon particle defined in the item [1], wherein the metal element M constituting the fine metal oxide particle comprises at least one element selected from cerium (Ce), zirconium (Zr), titanium (Ti), aluminum (A1), magnesium (Mg) and silicon (Si).
[3] The fine particle-carrying carbon particle defined in the item [1] or [2], wherein the noble metal element comprises at least one element selected from platinum (Pt), ruthenium (Ru), palladium (Pd) and gold (Au), and wherein the total content of the noble metal element is from 4 to 50 at.% based on the total of the metal element M constituting the fine metal oxide particle.
[4] The fine particle-carrying carbon particle defined in any of the items [1] to [3], wherein the amount of the carried fine metal oxide particles in the fine particle-carrying carbon particle is from 5 to 50% in the weight ratio (i.e., "the weight of the fine metal oxide particles"/"the weight of the entire fine particle-carrying carbon particle).
[5] The fine particle-carrying carbon particle defined in any of the items [1] to [4], wherein the average particle diameter of the carbon particle which carries thereon the fine metal oxide particles is from 20 to 70 nm.
[6] The fine particle-carrying carbon particle defined in any of the items [1] to [5], wherein the average particle diameter of the fine particle-carrying carbon particle which carries thereon the fine metal oxide particles is from 20 to 90 nm.
[7] A process for manufacturing the fine particle-carrying carbon particles defined in the item [1], comprising the steps of
   firstly, preparing a solution containing the complex ions of the metal constituting the fine metal oxide particles, and
   dispersing carbon particles in the resulting solution to adsorb the complex ions of the metal onto the carbon particles.
[8] A process for manufacturing the fine particle-carrying carbon particles defined in the item [1], comprising the steps of
   firstly, preparing a solution containing the complex ions of the metal constituting the fine metal oxide particles,
   dispersing carbon particles in the resulting solution to adsorb the complex ions of the metal onto the carbon particles, and
   subjecting the resulting dispersion to a hydrothermal treatment to deposit and carry the ultarine particles of the metal oxide which contains a noble metal element in the crystal lattice, on the surfaces of the carbon particles.
[9] An electrode for a fuel cell, using an electrocatalyst comprising the fine particle-carrying carbon particles defined in any of the items [1] to [6].

## Claims

1. An fine particle-carrying carbon particle comprising a carbon particle and fine particles of a metal oxide with an average crystallite size of from 1 to 20 nm carried on the carbon particle, wherein the metal oxide is represented by the formula: MOx (x = 0.5 to 2.0) in which a part of a metal element M is substituted by a noble metal element.

2. The fine particle-carrying carbon particle according to claim 1, wherein the metal element M constituting the fine metal oxide particle comprises at least one element selected from cerium (Ce), zirconium (Zr), titanium (Ti), aluminum (A1), magnesium (Mg) and silicon (Si).

3. The fine particle-carrying carbon particle according to claim 1 or 2, wherein the noble metal element comprises at least one element selected from platinum (Pt), ruthenium (Ru), palladium (Pd) and gold (Au), and wherein the total content of the noble metal element is from 4 to 50 at.% based on the total of the metal element M constituting the fine metal oxide particle.

4. The fine particle-carrying carbon particle according to any one of claims 1 to 3, wherein the amount of the carried fine metal oxide particles in the fine particle-carrying carbon particle is from 5 to 50% in the weight ratio (i.e., "the weight of the fine metal oxide particles"/"the weight of the entire fine particle-carrying carbon particle).

5. The fine particle-carrying carbon particle according to any one of claims 1 to 4, wherein the average particle diameter of the carbon particle which carries thereon the fine metal oxide particles is from 20 to 70 nm.

6. The fine particle-carrying carbon particle according to any one of claims 1 to 5, wherein the average particle diameter of the fine particle-carrying carbon particle which carries thereon the fine metal oxide particles is from 20 to 90 nm.

7. A process for manufacturing the fine particle-carrying carbon particles defined in claim 1, comprising the steps of
firstly, preparing a solution containing the complex ions of the metal constituting the fine metal oxide particle, and
dispersing carbon particles in the resulting solution to adsorb the complex ions of the metal onto the carbon particles.

8. A process for manufacturing the fine particle-carrying carbon particles defined in claim 1, comprising the steps of
firstly, preparing a solution containing the complex ions of the metal constituting the fine metal oxide particle,
dispersing carbon particles in the resulting solution to adsorb the complex ions of the metal onto the carbon particles, and
subjecting the resulting dispersion to a hydrothermal treatment to deposit and carry the ultarine particles of the metal oxide which contains a noble metal element in the crystal lattice, on the surfaces of the carbon particles.

9. An electrode for a fuel cell, using an electrocatalyst comprising the fine particle-carrying carbon particles defined in any one of claims 1 to 6.
